# FASCICULE DE BREVET EUROPEEN

(11) **EP 1 295 264 B1**
(45) Date de publication et mention de la délivrance du brevet: **22.03.2006**
(21) Numéro de dépôt: 01943587.4
(22) Date de dépôt: 08.06.2001
(51) Int. Cl.: G07F 7/10

(54) **PROCEDE DE SECURISATION DE TRANSACTIONS EFFECTUEES AU MOYEN DE CARTES POURVUES D'UN NUMERO D'IDENTIFICATION DU PROPRIETAIRE**
VERFAHREN ZUR SICHERUNG VON TRANSAKTIONEN AUSGEFÜHRT MITTELS MIT INHABERIDENTIFIKATIONSNUMMERN VERSEHENEN KARTEN
METHOD FOR MAKING SECURE TRANSACTIONS CARRIED OUT WITH CARDS PROVIDED WITH AN OWNER IDENTIFICATION NUMBER

(30) Priorité: 09.06.2000 FR 0007393
(43) Date de publication de la demande: 26.03.2003
(73) Titulaire: Atig, Sami, 75013 Paris (FR)
(72) Inventeur: Atig, Sami, 75013 Paris (FR)
(86) Numéro de dépôt international: PCT/FR2001/001772
(87) Numéro de publication internationale: WO 2001/095272

(56) Documents cités:
- DE-A- 19 924 232
- FR-A- 2 788 154
- US-A- 4 630 201
- US-A- 5 163 097
- US-A- 5 239 583
- US-A- 5 355 413
- US-A- 5 606 614
- US-A- 5 627 355
- US-A- 5 655 020

## Description

L'invention concerne un procédé de sécurisation de transactions effectuées au moyen de cartes pourvues d'un numéro d'identification du propriétaire et sécurisées par un code secret pour certaines opérations.

Les transactions bancaires ou commerciales effectuées au moyen de cartes, dont l'identification de l'utilisateur est assurée par un numéro de carte et confirmée éventuellement par un code secret, sont aujourd'hui d'usage courant. Ces cartes peuvent être à puce et/ou à piste magnétique ou autre moyen de stockage de données. Elles peuvent même être virtuelles.

La sécurisation par code secret assure normalement l'identification de l'utilisateur qui, théoriquement, est le seul à connaître ce code. Mais il existe des transactions dans lesquelles un code secret ne peut être utilisé notamment dans le commerce par téléphone ou minitel.

Il existe plusieurs autres possibilités de sécurisation notamment la biométrie (empreintes digitales, iris de l'oeil, voix ...) mais le numéro de code secret reste le plus facile à appliquer et est donc celui qui a été choisi pour les transactions "grand public".

Malheureusement, il est toujours possible à un tiers de connaître le numéro de la carte, par exemple lors de la transaction quand ce numéro doit être communiqué, et le code secret peut toujours être surpris lors de sa frappe particulièrement aux distributeurs automatiques de billets, dans la rue. De ce fait, si la carte est volée, il est possible de l'utiliser et de réaliser des transactions tant que le vol n'est pas consigné dans les ordinateurs des banques. Le document US-A-5 163 097 montre un état de la technique dans lequel un numéro d'identification d'un ATM va servir de base à la modification du code secret qui devient ainsi dépendant de l'ATM utilisé.

L'invention vise à pallier ces inconvénients au moyen d'un procédé qui assure le secret d'au moins un caractère du numéro de la carte et/ou au moins un caractère du code secret en modifiant ces caractères à chaque transaction.

Ce but est atteint selon l'invention telle que définie par la revendication 1, des modes préférentiels de l'invention étant présentés dans les revendications dépendantes.

Dans le cas où ledit paramètre est le montant ou la date d'une transaction antérieure, celle-ci peut être par exemple l'avant dernière transaction.

Pour sécuriser la transaction plus efficacement, le ou les caractère(s) du numéro de la carte et/ou du code secret peuvent être modifiés au moyen d'une fonction qui prend en compte le montant ou la date

d'une transaction. Pour que le procédé soit applicable, l'utilisateur de la carte convient avec l'organisme de gestion de celle-ci des points suivants :
- le montant ou la date de transaction à utiliser ;
- Le rang du ou des chiffres du montant ou de la date de transaction à utiliser ;
- Le nombre de caractères du numéro de la carte à faire varier
- Le rang du ou des caractère(s) du numéro de la carte à faire varier
- Le nombre de caractères du code à faire varier éventuellement;
- Le rang du ou des caractère(s) du code secret à faire varier éventuellement;

De préférence, dans le cas où l'on utilise une transaction antérieure comme événement fournissant le paramètre, celle-ci est l'avant dernière transaction. En effet, il est facile à un tiers présent lors des transactions de connaître le montant de celles-ci, notamment dans le cas d'un retrait à un distributeur automatique. Il est plus difficile de connaître le montant de la transaction effectuée la fois d'avant.

Selon une caractéristique particulière de l'invention, un second code secret est utilisé pour les transactions par télécommunications dont tous les caractères sont changés à chaque transaction en fonction d'un ou plusieurs paramètre(s) prédéterminé(s).

En effet, il faut, dans le cadre de ces transactions, se protéger contre une interception de la transmission du code. Pour cela on utilise ce second code. Le second code est changé après chaque transaction, même si celle-ci n'est pas validée par l'organisme responsable des cartes.

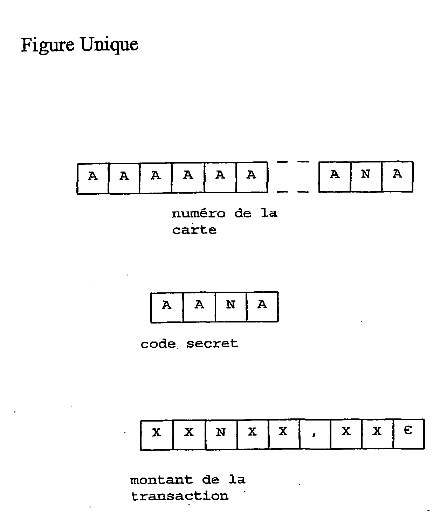

La figure représente schématiquement les positions des caractères d'un numéro de carte et d'un code secret dans un exemple de réalisation de l'invention dans lequel un seul caractère du numéro et du code est remplacé par le même caractère d'une seule transaction précédente.

Les caractères du numéro de la carte et du code secret sont représentés par un A à l'exception de l'un d'eux, le caractère variable, qui est représenté par un N. Le montant de la transaction antérieure a été représenté par des X à l'exception de l'un des caractères qui est représenté également par un N.

Une transaction antérieure, par exemple l'avant dernière, a porté sur la somme de 356,00 €.

Par convention avec l'organisme de gestion de la carte, c'est le chiffre des centaines de cette transaction qui doit être utilisé pour remplacer le caractère variable de la carte et celui du code. Par convention également, c'est, par exemple, le pénultième caractère qui doit être remplacé.

Le déroulement de la transaction est le suivant :

L'utilisateur de la carte introduit sa carte dans l'appareil enregistrant la transaction. L'appareil lit le numéro de la carte à l'exception du pénultième et demande de rentrer celui-ci. L'utilisateur va donc taper 3.

Le numéro de la carte est donc maintenant
AAAAA....A3A.

L'appareil demande alors le code secret qui est tapé par l'usager.
AA3A.

La transaction est alors réalisable.

Grâce au procédé selon l'invention le titulaire de la carte ainsi que l'organisme de gestion de cette carte sont assurés qu'en cas de vol, l'usage frauduleux de la carte va être sinon impossible, du moins extrêmement difficile, car l'utilisateur doit connaître non seulement le code secret mais, dans le cas où l'on choisit une transaction antérieure :
- le montant de la transaction antérieure ;
- Le ou les chiffres de cette transaction à utiliser ;
- l'ordre chronologique de cette transaction (dernière, avant dernière, ...etc);
- le rang du ou des caractères du code à remplacer.

Afin de faciliter la mémorisation de ces chiffres par un utilisateur n'effectuant que des retraits ou de petits achats dans les magasins, il est préférable qu'un seul chiffre soit utilisé, comme dans l'exemple décrit plus haut, et que ce soit le même pour le numéro de carte et pour le code secret lorsqu'on en utilise un.

Dans le cas où, selon l'exemple précédent, le chiffre clé de la pénultième transaction serait le même que celui de la dernière, on peut prévoir selon l'invention que le caractère variable sera remplacé par ce chiffre augmenté d'un chiffre convenu, par exemple 1.

Ainsi, dans notre exemple, si la dernière transaction a le même chiffre des centaines que l'avant dernière, le caractère variable sera remplacé par un 4 au lieu d'un 3.

Il peut être prévu, selon l'invention, que le ou les caractère(s) de remplacement est (sont) obtenu(s) au moyen d'une fonction prenant en compte des caractères du montant ou de la date d'une transaction, afin de sécuriser encore plus l'opération et de faciliter la mémorisation.

De plus, afin de faciliter l'élaboration des nouveaux numéros et/ou codes au moyen de la fonction pour l'utilisateur, celle-ci peut être effectuée sur tous les automates utilisant la carte et sur tout réseau sécurisé.

## Revendications

1. Procédé de réalisation de transactions au moyen de cartes pourvues d'un numéro d'identification du propriétaire éventuellement sécurisées par code secret, une transaction comportant les étapes préalables d'identification de la carte par la lecture ou la communication de son numéro et éventuellement d'authentification du titulaire par fourniture d'un code secret, **caractérisé en ce que**
- le numéro de la carte et/ou le code secret, comporte(nt) en des positions déterminées au moins un caractère modifié à chaque transaction ;
- le ou les caractères modifié(s) de la carte et/ou du code secret est (sont) modifié(s) en fonction d'au moins un caractère du montant d'une transaction ou d'une date de transaction.

2. Procédé selon la revendication 1, **caracterisé en ce que** le ou les caractère(s) modifiables du numéro de carte et/ou du code secret sont modifiés en fonction du ou des mêmes caractères du montant d'une transaction ou d'une date de transaction.

3. Procédé selon l'une quelconque des revendications 1 et 2, **caractérisé par le fait que** la transaction est une transaction antérieure.

4. Procédé selon l'une quelconque des revendications 1 à 3, **caractérisé en ce qu'**un seul numéro de la carte et/ou un seul numéro du code secret sont modifiés.

5. Procédé selon l'une quelconque des revendications 1 à 4 **caracterisé en ce qu'**un seul paramètre est utilisé pour la modification.

6. Procédé selon l'une quelconque des revendications précédentes, **caractérisé en ce que** le ou les caractère(s) du numéro de la carte et/ou du code secret sont modifiés au moyen d'une fonction.

7. Procédé selon la revendication 6 **caractérisé en ce que** l'élaboration des nouveaux numéros et/ou codes au moyen de la fonction peut être effectuée sur tous les automates utilisant la carte.

8. Procédé selon la revendication 6 **caractérisé en ce que** l'élaboration des nouveaux numéros et/ou codes au moyen de la fonction peut être effectuée sur tous les réseaux sécurisés.

## Patentansprüche

1. Verfahren zur Realisierung von Transaktionen mittels mit einer Identifikationsnummer des Eigentümers versehenen, eventuell durch einen Geheimcode gesicherten Chipkarten, wobei eine Transaktion die vorherigen Identifikationsstufen der Karte durch Lesen oder die Kommunikation ihrer Nummer und eventuell Authentifizierung des Inhabers durch Lieferung eines Geheimcodes umfasst, **dadurch gekennzeichnet, dass**
- die Nummer der Karte und / oder der Geheimcode in bestimmten Positionen mindestens ein bei jeder Transaktion geändertes Zeichen umfasst / umfassen;
- das oder die geänderte(n) Zeichen der Karte und / oder des Geheimcodes in Abhängigkeit von wenigstens einem Zeichen des Betrages einer Transaktion oder eines Transaktionsdatums geändert wird / werden.

2. Verfahren nach Anspruch 1, **dadurch gekennzeichnet, dass** das / die veränderbare(n) Zeichen der Kartennummer und / oder des Geheimcodes in Abhängigkeit desselben oder derselben Zeichen des Betrages einer Transaktion oder eines Transaktionsdatums geändert wird / werden.

3. Verfahren nach Anspruch 1 und 2, **gekennzeichnet durch** die Tatsache, dass die Transaktion eine vorherige Transaktion ist.

4. Verfahren nach einem der Ansprüche, **dadurch gekennzeichnet, dass** eine einzige Nummer der Karte und / oder eine einzige Nummer des Geheimcodes verändert wird / werden.

5. Verfahren nach einem der Ansprüche, **dadurch gekennzeichnet, dass** für die Änderung ein einziger Parameter verwendet wird.

6. Verfahren nach einem der vorherigen Ansprüche, **dadurch gekennzeichnet, dass** der oder die Zeichen der Nummer der Karte und / oder des Geheimcodes mittels einer Funktion verändert werden.

7. Verfahren nach Anspruch 6, **dadurch gekennzeichnet, dass** die Ausarbeitung der neuen Nummern und / oder Codes mittels der Funktion auf allen die Karte nutzenden Automaten durchgeführt werden kann.

8. Verfahren nach Anspruch 6, **dadurch gekennzeichnet, dass** die Ausarbeitung der neuen Nummern und / oder Codes mittels der Funktion auf allen gesicherten Netzen durchgeführt werden kann.

## Claims

1. Method for performing transactions by means of cards provided with an owner identification number possibly secure by secret code, said transaction comprising the preliminary steps of identifying the card via the reading or the communication of its number and possibly of authentication of the holder by supply of a secret code, **characterized in that**
- the number of the card and/or the secret code, comprise in determined positions at least one character modified with each transaction;
- the modified character(s) of the card and/or the secret code is(are) modified according to at least one character of the amount of a transaction or a date of transaction.

2. Method according to claim 1, **characterized in that** the modifiable character(s) of the number of card and/or the secret code is(are) modified according to or of the same characters of the amount of a transaction or a date of transaction.

3. Method according to any of the claims 1 and 2, **characterized by** the fact that the transaction is a former transaction.

4. Method according to any of claims 1 to 3, **characterized in that** only one number of the card and/or only one number of the secret code are modified.

5. Method according to any of claims 1 to 4 **characterized in that** only one parameter is used for the modification.

6. Method according to any of the preceding claims, **characterized in that** the character(s) of the number of the card and/or the secret code are modified by means of a function.

7. Method according to claim 6 **characterized in that** the development of the new numbers and/or codes by means of the function can be carried out on all automated machines using the card.

8. Method according to claim 6 **characterized in that** the development of the new numbers and/or codes by means of the function can be carried out on all secure networks.
